(19) Europäisches Patentamt
European Patent Office
Office européen des brevets

(11) Veröffentlichungsnummer : **0 052 073**
**B1**

(12) # EUROPÄISCHE PATENTSCHRIFT

(45) Veröffentlichungstag der Patentschrift : **19.08.87**

(51) Int. Cl.[4] : **C 08 K 5/34**, C 09 D 7/12

(21) Anmeldenummer : **81810441.6**

(22) Anmeldetag : **04.11.81**

(54) **Lichtstabilisierung von sauerkatalysierten Einbrennlacken.**

(30) Priorität : **10.11.80 CH 8326/80**
**29.06.81 CH 4271/81**

(43) Veröffentlichungstag der Anmeldung : **19.05.82 Patentblatt 82/20**

(45) Bekanntmachung des Hinweises auf die Patenterteilung : **19.08.87 Patentblatt 87/34**

(84) Benannte Vertragsstaaten : **AT BE CH DE FR GB IT LI NL SE**

(56) Entgegenhaltungen :
**EP-A- 0 002 753**
**EP-A- 0 006 213**
**EP-A- 0 016 723**

(73) Patentinhaber : **CIBA-GEIGY AG**
**Klybeckstrasse 141**
**CH-4002 Basel (CH)**

(72) Erfinder : **Berner, Godwin, Dr.**
**Waldhofstrasse 70**
**CH-4310 Rheinfelden (CH)**

**EP 0 052 073 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung befasst sich mit dem Stabilisieren von sauerkatalysierten Einbrennlacken auf der Basis heissvernetzbarer Acryl-, Polyester- oder Alkydharze gegen die Einwirkung von Licht durch den Zusatz von gewissen N-substituierten Polyalkylpiperidinderivaten sowie mit den so stabilisierten sauerkatalysierten Einbrennlacken.

Von Fall zu Fall, insbesondere aber bei Ausbesserungslackierungen und festkörperreichen Lacken für den Industrielacksektor, werden Einbrennlacksysteme auf der Basis heissvernetzbarer Acryl-, Polyester- oder Alkydharze mit einem zusätzlichen Säurekatalysator versehen. Werden dabei Lichtschutzmittel vom Typ der Polyalkylpiperidinderivate mitverwendet, so werden häufig Ausfällerscheinungen durch Salzbildung zwischen Lichtschutzmittel und Säurekatalysator, Härtungsverzögerungen, Pigmentflocculationen sowie eine reduzierte Lichtschutzwirkung beobachtet.

In der EP-A-6213 wurde vorgeschlagen, diese Probleme dadurch zu lösen, dass man nur solche Polyalkylpiperidin-Lichtschutzmittel verwendet, deren Piperidin-Stickstoff substituiert ist, insbesondere solche Lichtschutzmittel, die eine Gruppe der Formel II enthalten

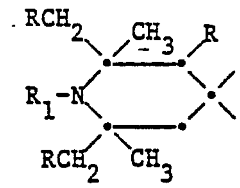

(II)

worin R Wasserstoff oder Methyl und $R_1$ $C_1$-$C_{18}$-Alkyl, $C_1$-$C_6$-Hydroxyalkyl, $C_3$-$C_8$-Alkenyl, $C_3$-$C_8$-Alkinyl gegebenenfalls im Alkylteil durch Hydroxy substituiertes $C_7$-$C_{12}$-Aralkyl, $C_1$-$C_8$-Alkanoyl oder $C_3$-$C_5$-Alkenoyl bedeuten.

Tatsächlich verhalten sich solche N-substituierten Piperidinderivate in sauerkatalysierten Lacken wesentlich günstiger hinsichtlich der beobachteten Störungen als ihre N-unsubstituierten Analogen, also die Verbindungen der Formel II, worin $R_1$ Wasserstoff ist.

Es hat sich gezeigt, dass viele der in der EP-A-6213 beschriebenen N-substituierten Lichtschutzmittel in gewissen Fällen den Anforderungen der Praxis der Lacktechnologie nicht genügen. Bei sehr niedrigen Katalysator-Konzentrationen sowie bei niedrigen Einbrenntemperaturen können erhebliche Verzögerungen der Härtung eintreten. Die gehärteten Lacke können beim Lagern in feuchter Atmosphäre opak werden, was der Fachmann als « Weissanlaufen » bezeichnet. Die gehärteten Lacke können ausserdem ungenügende Lösungsmittelbeständigkeit und Kratzfestigkeit besitzen. Es wurde jedoch gefunden, dass bestimmte ausgewählte Verbindungen der Formel II diese Nachteile nicht zeigen und sich damit in bevorzugter Weise als Lichtschutzmittel für sauerkatalysierte Einbrennlacke eignen. Es handelt sich hierbei um solche Verbindungen der Formel II, deren Gruppe $R_1$ eine Alkanoylgruppe ist und die in 4-Stellung des Piperidinringes eine Spirohydantoingruppe enthalten.

Gegenstand der Erfindung ist daher die Verwendung von Verbindungen der Formel I,

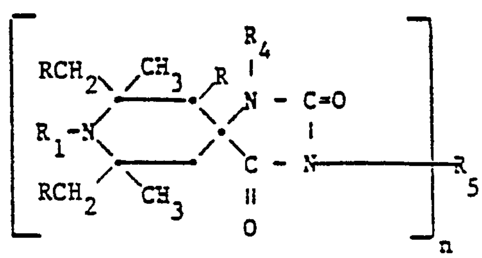

(I)

worin

n die Zahlen 1 oder 2 bedeutet,

R Wasserstoff oder Methyl,

$R_1$ $C_2$-$C_4$-Alkanoyl, ist,

$R_4$ Wasserstoff, $C_1$-$C_{12}$-Alkyl, Allyl, Benzyl oder $C_2$-$C_6$-Alkoxyalkyl ist und

$R_5$, wenn $n = 1$, Wasserstoff, $C_1$-$C_{12}$-Alkyl, Glycidyl, $C_3$-$C_5$-Alkenyl, $C_7$-$C_9$-Aralkyl, $C_5$-$C_7$-Cycloalkyl, $C_2$-$C_6$-Acyloxyalkyl, $C_6$-$C_{10}$-Aryl und, wenn $n = 2$, $C_2$-$C_{12}$-Alkylen oder $C_6$-$C_{12}$-Arylen oder eine Gruppe $-CH_2CH(OR_1)CH_2-(OCH_2-CH(OR_1)CH_2)_2-$ bedeutet, gegebenenfalls zusammen mit weiteren Stabilisatoren, als Lichtschutzmittel für sauerkatalysierte Einbrennlacke auf der Basis heissvernetzbarer Acryl-, Polyester- oder Alkydharze.

Bevorzugt ist $R_1$ eine Acetylgruppe.

R ist bevorzugt Wasserstoff. In diesem Fall stellen die Verbindungen der Formel I Derivate des 2,2,6,6-Tetramethylpiperidins dar.

Beispiele für solche Polyalkylpiperidin-Lichtschutzmittel sind folgende Verbindungen :

3-Dodecyl-1,3,8-triaza-7,7,9,9-tetramethyl-8-acetyl-spiro [4.5] decan-2,4-dion
3-Benzyl-1,3,8-triaza-7,7,9,9-tetramethyl-8-acetyl-spiro [4.5] decan-2,4-dion
3-Allyl-1,3,8-triaza-1,7,7,9,9-pentamethyl-8-propionyl-spiro [4.5] decan-2,4-dion

oder die Verbindungen der folgenden Formeln :

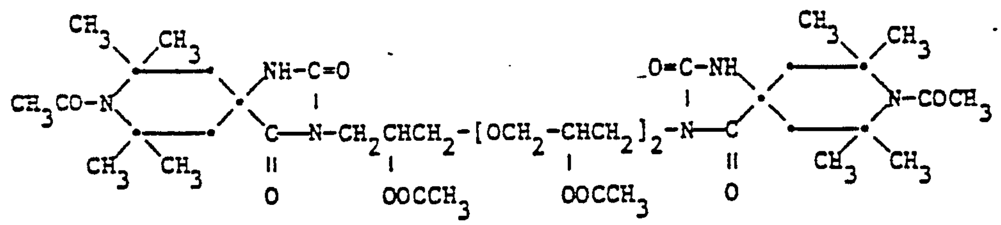

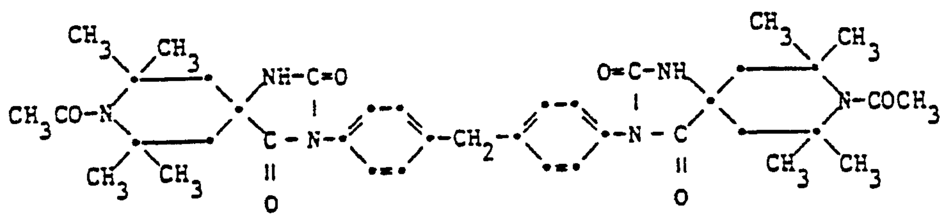

Die Acrylharzlacke, die erfindungsgemäss gegen Licht stabilisiert werden können, sind die üblichen Acrylharzeinbrennlacke, wie sie beispielsweise in H. Kittel's Lehrbuch der Lacke und Beschichtungen, Band 1, Teil 2, auf den Seiten 735 und 742 (Berlin, 1972) bzw. in H. Wagner, H.F. Sarx, Lackkunstharze (1971), auf den Seiten 229-238 beschrieben sind.

Die Polyesterlacke, die erfindungsgemäss gegen die Einwirkung von Licht stabilisiert werden können, sind die üblichen Einbrennlacke, wie sie beispielsweise in H. Wagner, H.F. Sarx, Lackkunstharze (1971), auf den Seiten 86-99 beschrieben sind.

Die Alkydharzlacke, die erfindungsgemäss gegen die Einwirkung von Licht stabilisiert werden können, sind die üblichen Einbrennlacke, die insbesondere zur Lackierung von Automobilen (sogenannte Automobil-Decklacke) verwendet werden, beispielsweise Lacke auf der Basis von Alkyd-Melaminharzen und Alkyd-Acryl-Melaminharzen (siehe H. Wagner, H.F. Sarx, Lackkunstharze (1971), Seiten 99-127).

Die erfindungsgemäss stabilisierbaren Einbrennlacke können auch Gemische von Acryl-, Polyester- und Alkydharzen untereinander oder mit anderen Lackharzen enthalten. Dabei können die Acryl-, Polyester- und Alkydharze in der Hitze selbstvernetzend sein oder man verwendet sie im Gemisch mit Vernetzern, wofür insbesondere Melaminharze geeignet sind.

Die erfindungsgemäss stabilisierten sauerkatalysierten Einbrennlacke eignen sich sowohl für Metalleffekt- wie auch für Uni-Lackierungen, insbesondere im Falle von Ausbesserungslackierungen. Das Auftragen der erfindungsgemäss stabilisierten Lacke geschieht bevorzugt wie üblich nach zwei Verfahren, entweder nach dem Einschicht- oder nach dem Zweischichtverfahren. Im letzteren Falle wird zuerst die Pigment enthaltende Schicht aufgetragen und dann darüber eine deckende Klarlackschicht. Bei der Verwendung in Zweischichtlackierungen kann das für die erfindungsgemässe Stabilisierung zu verwendende Polyalkylpiperidinderivat entweder nur im unpigmentierten Decklack oder sowohl im unpigmentierten Decklack wie auch im Pigment enthaltenden Vorlegelack eingearbeitet werden.

Die Menge des zugesetzten Polyalkylpiperidinderivates beträgt dabei 0,1 bis 5 Gew.-%, bezogen auf das lösungsmittelfreie Bindemittel, vorzugsweise 0,5 bis 1 Gew.-%. Die Lacke können in üblichen organischen Lösungsmitteln oder in Wasser gelöst oder dispergiert sein oder lösungsmittelfrei sein.

Die erfindungsgemässen Lackharze eignen sich vor allem für festkörperreiche Industrielacke, sogenannte « high-solids », wie sie vor allem in der Automobilindustrie und bei der Reparatur von Automobilen zunehmend an Bedeutung gewinnen, insbesondere für Anwendungen bei niedriger Härtungstemperatur.

Für die Erzielung maximaler Lichtbeständigkeit kann die Mitverwendung von anderen üblichen Lichtschutzmitteln, wie z. B. von UV-Absorbern oder von organischen Nickelverbindungen, von Vorteil sein. Von besonderer Bedeutung ist die Mitverwendung von UV-Absorbern vom Typ der 2-Hydroxybenzophenone, 2-(2-Hydroxyphenyl)-benztriazole oder der Oxalanilide, die eine synergistische Wirkung aufweisen können. Beispiele hierfür sind 2-(2-Hydroxy-3,5-di-t-amyl-phenyl)-benztriazol, 2-[2-Hydroxy-3,5-di(α-dimethylbenzyl)-phenyl]-benztriazol, 2-(2-Hydroxy-5-t-octyl-phenyl)-benztriazol, 2-(2-Hydroxy-3,5-di-t-octyl-phenyl)-benztriazol, 2,4-Dihydroxybenzophenon, 2-Hydroxy-4-octyloxy-benzophenon, 2-Hydroxy-4-dodecyloxy-benzophenon, 2-Aethyl-2'-äthoxy-4'-t-butyl-oxalanilid oder 2-Aethyl-2'-äthoxy-oxalanilid. Bei der Mitverwendung von anderen üblichen Lichtschutzmitteln in Zweischichtlackierungen

können diese nur im unpigmentierten Decklack oder sowohl im unpigmentierten Decklack wie auch im Pigment enthaltenden Vorlegelack eingearbeitet werden.

Im Falle solcher Kombinationen beträgt die Summe aller Lichtschutzmittel 0,2 bis 5 Gew.-%, vorzugsweise 0,5 bis 2 Gew.-%, bezogen auf das Lackharz.

Weitere Zusatzstoffe, die im Lack enthalten sein können, sind Antioxydantien, beispielsweise solche vom Typ sterisch gehinderter Phenolderivate, Phosphorverbindungen, wie Phosphite, Phosphine oder Phosphonite, Weichmacher, Verlaufshilfsmittel, Härtungsgbeschleuniger, Verdicker, Dispergiermittel oder Haftverbesserer.

Die folgenden Beispiele beschreiben die erfindungsgemässe Verwendung von N-acylierten Polyalkylpiperidinderivaten in sauerkatalysierten Einbrennlacken. Teile bedeuten darin Gewichtsteile, Prozente bedeuten Gewichtsprozente.

Beispiel : Stabilisierung bei Schnellbewitterung eines Zweischicht-Metalleffektlackes

Grundrezept der Lacke

a) Metalleffekt-Vorlegelack

27 Teile Polyesterharz (L 1850 Dynamit Nobel AG)
3 Teile Melaminharz (Maprenal® RT, Farbwerke Hoechst AG)
2 Teile Celluloseacetobutyrat (CAB 531, Eastman Chem. Corp.)
8 Teile Aluminiumbronze (ALCOA 726, Aluminium Corp. od America)
10 Teile Toluol
7 Teile Xylol
3 Teile Butanol
25 Teile Butylacetat
15 Teile aromatisches Lösungsmittelgemisch (Solvesso® 150, ESSO AG)

b) Unpigmentierter Decklack

56 Teile Acrylharz (P araloid® OL 42, Rohm & Haas Corp.)
20 Teile Melaminharz (Cymel® 301, American Cyanamid Corp.)
0,3 Teile p-Toluolsulfonsäure
2 Teile Celluloseacetobutyrat (CAB 551, Eastman Chem. Corp.)
3 Teile Verlaufshilfsmittel
11 Teile Butanol
8 Teile Butylacetat

Aluminiumbleche von der Grösse 57 × 79 mm und der Dicke 0,5 mm, die mit einem Grundlack auf Basis von Polyester/Epoxidharz beschichtet waren, wurden erst mit dem Vorlegelack und anschliessend mit dem Decklack beschichtet. Der Vorlegelack wurde zu einer Schichtdicke von ca. 15 µm aufgespritzt und ca. 10 Minuten abgelüftet. Anschliessend wurde der Klarlack zu einer Schichtdicke von ca. 30 µm aufgesprüht. Nach einer Abluftzeit von 15 Minuten wurden die Proben 30 Minuten bei 120 °C eingebrannt.

Vor dem Auftragen wurden dem Decklack jeweils 1 % (bezogen auf das Lackharz) eines Lichtschutzmittels gemäss Erfindung, eines handelsüblichen UV-Absorbers und eines Gemisches dieser beiden Lichtschutzmittel zugegeben.

Die Proben werden in einem UVCON-Bewitterungsgerät (Atlas Corp.) bei einem Zyklus von 4 Stunden UV-Belichtung bei 60 °C und 4 Stunden Wasserdampf-Kondensation bei 50 °C bewittert.

Der Oberflächenglanz der Proben wird in Abständen von 200 Stunden nach der Methode ASTM D 523 gemessen.

Als Lichtschutzmittel gemäss der vorliegenden Erfindung wurde 3-Dodecyl-1,3,8-triaza-7,7,9,9-tetramethyl-8-acetyl-spiro [4.5] decan-2,4-dion (= LS) verwendet,

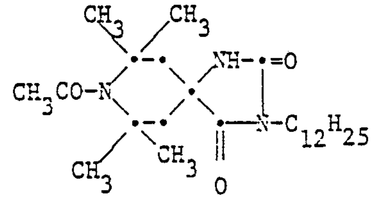

und zwar in einer Menge von 1 % bezogen auf Festkörper des Decklackes, allein und in Kombination mit einem UV-Absorber vom Benztriazol-Typ. Die Ergebnisse sind in Tabelle 1 aufgeführt.

Tabelle 1

| Lichtschutzmittel | Oberflächenglanz 20° nach | | | | |
|---|---|---|---|---|---|
| | 0 | 200 | 400 | 600 | 800 h Bewitterung |
| ohne | 77 | 52 | 16 | 4 | - |
| 1 % LS | 80 | 60 | 55 | 24 | 10 |
| 1 % LS + 1 % Tinuvin® 900 *) | 82 | 73 | 74 | 61 | 40 |

* 2-[2-Hydroxy-3,5-di(α-dimethylbenzyl)-phenyl]-benztriazol.

**Patentansprüche**

1. Verwendung von N-substituierten 2,2,6,6-Tetraalkylpiperidinverbindungen, gegebenenfalls zusammen mit weiteren Stabilisatoren als Lichtschutzmittel für sauerkatalysierte Einbrennlacke auf der Basis heissvernetzbarer Acryl-, Polyester- oder Alkydharze, dadurch gekennzeichnet, dass man eine Verbindung der Formel I verwendet

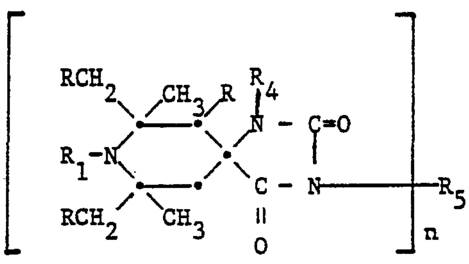

(I)

worin

n die Zahlen 1 oder 2 bedeutet,

R Wasserstoff oder Methyl ist,

$R^1$ $C_2$-$C_4$-Alkanoyl ist ;

$R_4$ Wasserstoff, $C_1$-$C_{12}$-Alkyl, Allyl, Benzyl oder $C_2$-$C_6$-Alkoxyalkyl ist und

$R_5$, wenn n = 1, Wasserstoff, $C_1$-$C_{12}$-Alkyl, Glycidyl, $C_3$-$C_5$-Alkenyl, $C_7$-$C_9$-Aralkyl, $C_5$-$C_7$-Cycloalkyl, $C_2$-$C_6$-Acyloxyalkyl, $C_6$-$C_{10}$-Aryl und, wenn n = 2, $C_2$-$C_{12}$-Alkylen oder $C_6$-$C_{12}$-Arylen oder eine Gruppe $-CH_2CH(OR_1)CH_2-OCH_2-CH(OR_1)CH_2)_2-$ bedeutet.

2. Verwendung gemäss Anspruch 1 einer Verbindung der Formel I, worin R und $R_4$ Wasserstoff sind, $R_1$ Acetyl ist und $R_5$ Dodecyl ist.

3. Verwendung gemäss Anspruch 1, dadurch gekennzeichnet, dass man die Verbindung der Formel I in einer Menge von 0,1 bis 5 Gew.-%, bezogen auf das lösungsmittelfreie Bindemittel (Lackharz), verwendet.

4. Verwendung gemäss Anspruch 1, dadurch gekennzeichnet, dass man zusätzlich ein anderes Lichtschutzmittel, insbesondere einen UV-Absorber vom Typ der 2-Hydroxybenzophenone, 2-(2-Hydroxyphenyl)-benztriazole oder der Oxalanilide verwendet.

5. Verwendung gemäss Anspruch 5, dadurch gekennzeichnet, dass die Summe aller Lichtschutzmittel 0.2 bis 5 Gew.-%, bezogen auf das lösungsmittelfreie Bindemittel (Lackharz), beträgt.

6. Verwendung gemäss Anspruch 1 in festkörperreichen Industrielacken, insbesondere in Automobillacken.

7. Sauerkatalysierter Einbrennlack auf Basis von heissvernetzbaren Acryl-, Polyester- oder Alkydharzen, enthaltend als Lichtschutzmittel mindestens eine Verbindung der Formel I gemäss Anspruch 1.

**Claims**

1. Use of N-substituted 2,2,6,6-tetraalkylpiperidine compounds, optionally together with further stabilisers, as light stabilisers for acid-catalysed stoving lacquers bases on hot-crosslinkable acrylic, polyester or alkyd resins, characterised in that a compound of the formula I is used

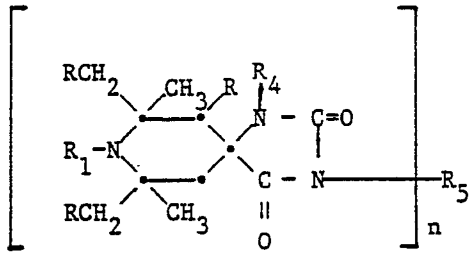

(I)

in which

n represents the integer 1 or 2,

R represents hydrogen or methyl,

$R_1$ represents $C_2$-$C_4$-alkanoyl,

$R_4$ represents hydrogen, $C_1$-$C_{12}$-alkyl, allyl, benzyl or $C_2$-$C_6$-alkoxyalkyl, and

$R_5$, when $n = 1$, represents hydrogen, $C_1$-$C_{12}$-alkyl, glycidyl, $C_3$-$C_5$-alkenyl, $C_7$-$C_9$-aralkyl, $C_5$-$C_7$-cycloalkyl, $C_2$-$C_6$-acyloxyalkyl, $C_6$-$C_{10}$-aryl and, when $n = 2$, represents $C_2$-$C_{12}$-alkylene or $C_6$-$C_{12}$-arylene or a $-CH_2CH(OR_1)CH_2-(OCH_2-CH(OR_1)CH_2)_2$-group.

2. Use according to claim 1 of a compound of the formula I in which R and $R_4$ represent hydrogen, $R_1$ represents acetyl and $R_5$ represents dodecyl.

3. Use according to claim 1, characterised in that the compound of the formula I is used in an amount of from 0.1 to 5 % by weight, based on the solvent-free binder (coating resin).

4. Use according to claim 1, characterised in that there is used additionally another light stabiliser, especially an UV-absorber of the 2-hydroxybenzophenone, 2-(2-hydroxyphenyl)-benzotriazole or oxalanilide type.

5. Use according to claim 5, characterised in that the total of all the light stabilisers is from 0.2 to 5 % by weight, based on the solvent-free binder (coating resin).

6. Use according to claim 1 in high-solids industrial lacquers, especially automobile lacquers.

7. Acid-catalysed stoving lacquer based on hot-crosslinkable acrylic, polyester or alkyd resins, containing as light stabiliser at least one compound of the formula I according to claim 1.

**Revendications**

1. Application de dérivés de tétra-alkyl-2,2,6,6 pipéridines substituées à l'azote, éventuellement en association avec d'autres stabilisants, comme stabilisants à la lumière pour des peintures et vernis à cuire catalysés par des acides et à base de résines acryliques, polyesters ou alkydes thermoréticulables, application caractérisée en ce qu'on utilise un composé répondant à la formule I :

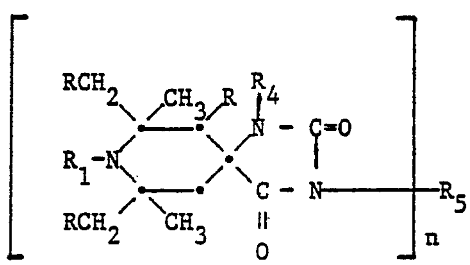

(I)

dans laquelle

n représente un nombre égal à 1 ou à 2,

R représente l'hydrogène ou un méthyle,

$R_1$ représente un alcanoyle en $C_2$-$C_4$,

$R_4$ représente l'hydrogène, un alkyle en $C_1$-$C_{12}$, un allyle, un benzyle ou un alcoxyalkyle en $C_2$-$C_6$ et

$R_5$ représente dans le cas où n est égal à 1 l'hydrogène, un alkyle en $C_1$-$C_{12}$, un glycidyle, un alcényle en $C_3$-$C_5$, un aralkyle en $C_7$-$C_9$, un cycloalkyle en $C_5$-$C_7$, un acyloxyalkyle en $C_2$-$C_6$ ou un aryle en $C_6$-$C_{10}$ et dans le cas où n est égal à 2 un alkylène en $C_2$-$C_{12}$, un arylène en $C_6$-$C_{12}$ ou un radical : $-CH_2CH(OR_1)CH_2-(OCH_2-CH(OR_1)CH_2)_2$.

2. Application selon la revendication 1 d'un composé de formule I dans lequel R et $R_4$ représentent chacun l'hydrogène, $R_1$ représente un radical acétyle et $R_5$ un radical dodécyle.

3. Application selon la revendication 1 caractérisée en ce que le composé de formule I est utilisé en une quantité de 0,1 à 5 % en poids par rapport au liant (résine pour peintures ou vernis) dépourvu de solvant.

4. Application selon la revendication 1, caractérisée en ce qu'on utilise un stabilisant à la lumière supplémentaire, plus spécialement un absorbeur de rayons ultra-violets du type des hydroxy-2

benzophénones, des (hydroxy-2 phényl)-2 benzotriazoles ou des oxalanilides.

5. Application selon la revendication 4 caractérisée en ce que la somme des quantités de tous les stabilisants à la lumière est comprise entre 0,2 et 5 % en poids par rapport au liant (résine pour peintures ou vernis) dépourvu de solvant).

6. Application selon la revendication 1 dans des peintures ou vernis industriels à haute teneur en matière solide, plus particulièrement dans des peintures et vernis pour automobiles.

7. Peintures et vernis à cuire catalysés par des acides et à base de résines acryliques, polyesters ou alkydes thermoréticulables, caractérisés en ce qu'ils contiennent, comme stabilisant à la lumière, au moins un composé de formule I selon la revendication 1.